(19) Europäisches Patentamt
European Patent Office
Office européen des brevets

(11) Publication number: **0 064 039 B2**

(12) # NEW EUROPEAN PATENT SPECIFICATION

(45) Date of publication of the new patent specification: **26.07.89**

(51) Int. Cl.⁴: **C 08 L 23/04**, C 08 K 5/49

(21) Application number: **82850068.6**

(22) Date of filing: **01.04.82**

(54) **Use of an ethylene polymer composition for the production of film.**

(30) Priority: **16.04.81 SE 8102488**

(43) Date of publication of application:
**03.11.82 Bulletin 82/44**

(45) Publication of the grant of the patent:
**03.04.85 Bulletin 85/14**

(45) Mention of the opposition decision:
**26.07.89 Bulletin 89/30**

(84) Designated Contracting States:
**AT BE CH DE FR GB IT LI NL**

(56) References cited:
**EP-A- 0 004 647**
**EP-A- 0 005 269**
**EP-B- 0 006 110**
**BE-A- 849 782**
**DE-A- 2 014 172**
**DE-A- 2 727 381**
**DE-C- 1 021 571**
**FR-A- 1 555 941**
**GB-A- 803 557**
**GB-A- 934 988**
**GB-A- 1 039 772**
**GB-A- 1 292 743**
**GB-A- 1 490 938**
**US-A- 2 860 115**
**US-A- 3 354 118**
**US-A- 3 655 832**
**US-A- 3 716 603**
**US-A- 4 076 698**
**US-A- 4 187 212**
**US-A- 4 205 021**

**Plastics Eng. 3/75, pp. 28+29**
**Modern Plastics Intern. 2/78, pp. 40-42**
**C & EN 5.12.77, pp. 21+22**

(73) Proprietor: **NESTE OY, Keilaniemi, SF-02150 Espoo (FI)**

(72) Inventor: **Boström, Magnus, Västra Söbacken 24, S-444 00 Stenungsund (SE)**
Inventor: **Friman, Bo Yngve, Värlöksvägen 13, S-444 00 Stenungsund (SE)**

(74) Representative: **Schöld, Zaid et al, Nobel Industries Sweden AB Patent Department Box 11554, S-100 61 Stockholm (SE)**

(56) References cited: (continuation)
**Borg-Warner Corp., "Weston 618", 1/77**
**Borg-Warner Corp., "Weston Phosphites The Great Stabilizers", 8/79**
**Borg-Warner Corp., Product Bulletin CA 104, 11/76**
**Plastics world, Dec. 1979, p. 86**
**Scan. Plast. 80.3.14, Nov. 1980**
**Unifos Kemi AB, "Polyethylene for Blow Moulding", 13.12.76**
**Kunststoffe, 67 (1977), 11, pp. 684-687**
**SANDOZ Colors & Chemicals, "Sandostab P-EPQ", 6-274/76 (1976)**
**"IRGAFOS 168", CIBA-GEIGY, Dec. 1980**
**"High Polymers", vol. XVIII, pp. 116-118 (1962)**
**Esso Chemicals, "Escorene Linear LDPE", 9/80**
**Levett et al., A new low-density polyethylene, SPE Journal, vol. 26, June 1970, pp. 40-43**
**Encyclopedia of Polymer Science and Technology, vol. 12, 1970, pp. 728+734**

**The file contains technical information submitted after the application was filed and not included in this specification**

EP 0 064 039 B2

## Description

The present invention relates to the use of compositions based on ethylene polymers for the production of film. More particularly the invention relates to the use of compositions based on an essentially linear ethylene polymer of low density and certain phosphorous compounds for this purpose.

The use of phosphorous compounds as stabilizers in polyolefins is well-known. According to USA 4 187 212 a combination is used for stabilization of polyolefins, such as polyethylene and polypropylene, against thermooxidative deterioation. USA 3 354 118 describes the use of a combination of bisphenolalkanoic acid derivatives and trialkyl or triaryl phosphites as stabilizers for polypropylene. BEA 849 782 discloses a three component system comprising a phenolic antioxidant, a cyclic diphosphite derivative of pentaerythritol and an alkali metal salt of a carboxylic acid as stabilizer for polyolefins and especially for polypropylene. It is further known to use triarylphosphites in specific polyethylene materials produced with Phillips catalysts - a chromium containing catalyst. This is for example described in the European patent application 0 000 025. According to this application, and closely related applications, e.g. European patent application 0 005 269, tris-(2,4-dialkylphenyl)-phosphite is used in Phillips-polyethylene to make the production of thin films possible. The base polymers, which are used, have densities varying between 935 and 960 kg/m$^3$.

Ethylene polymers, which are essentially linear, have low density and fairly narrow molecular weight distribution, can be produced by specific methods, e.g. by gas-phase polymerization at low pressures. Films can be produced from these polymers without any great problems and the polymers permit production of thin films without requiring special additives. Films from these polymers do, however, not have satisfactory optical properties. A reduced gloss of the film is particularly noticeable, compared with conventional polyethylene.

According to the present invention, it has been found, that compositions based on an essentially linear ethylene polymer of low density and fairly narrow molecular weight distribution and certain phosphorous compounds, namely phosphites, phosphonites and phosphonic acid derivatives, are very suitable for film production. Use of the mentioned phosphorous compounds lead to an improvement in the optical properties of the produced film, and particularly to an improvement of the gloss.

The present invention thus relates to the use of an ethylene polymer composition for the production of film, which composition essentially comprises an ethylene polymer and at least 0.005 per cent by weight, based on the ethylene polymer, of a phosphite, phosphonite or phosphonic acid derivative, which will be defined in more detail in the following. The ethylene polymer in the composition is essentially straight and is a copolymer of ethylene and up to 20 per cent by weight, based on the ethylene polymer, of one or several alpha-olefins, having 3 to 14 carbon atoms. The ethylene polymer has a density of not more than 935 kg/m$^3$ and a molecular weight distribution, $M_w/M_n$ within the range 1.5 to 6. The molecular weight, $M_w$, of the ethylene polymer should suitably be within the range 25000 to 500000.

The phosphorous compounds in the compositions are selected from the groups a) phosphites and phosphonites and b) phosphonic acid derivatives.

The compounds in the group a) can be characterized by the general formula

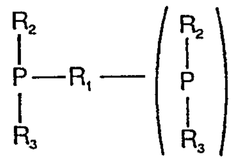
n = 0 or 1,

wherein $R_2$ and $R_3$, independent of each other, are alkyl, aryl, alkoxy or phenoxy groups, whereby the alkyl and alkoxy groups contain 1 to 30 carbon atoms. $R_1$ has the same meaning as $R_2$ and $R_3$, or is the corresponding divalent group when n is 1. As mentioned $R_1$ can be an aryl group and this includes also ring systems comprising two or three ring structures, e.g. bisphenylylene-derivatives. Aryl and phenoxy groups can be alkyl substituted in 2-, 3-, 4- and/or 5-position. Alkyl substituents do then suitably have 1 to 15 carbon atoms, and preferably 1 to 9 carbon atoms. This formula comprises as well symmetric and asymmetric phosphites as compounds of the di-phosphonite type.

Particularly preferred compounds in this group are trisalkylphenyl-phosphites, tris-(2,4-dialkylphenyl)-phosphites and tetrakis(2,4-dialkylphenyl)-4,4′-bisphenylylene-disphosphonites. In the trisalkylphenyl-phosphites the alkyl groups are preferably nonyl groups. The alkyl groups in the two other mentioned phosphites and phosphonites have 1 to 9 carbon atoms. Particularly preferred compounds in the present compositions are trisnonylphenylphosphite, tris-(2,4-ditert.butylphenyl)-phosphite and tetrakis(2,4-ditert.butylphenyl)-4,4′-bisphenylylene-diphosphonite.

The phosphonic acid derivatives in the group b) can be characterized by the general formula

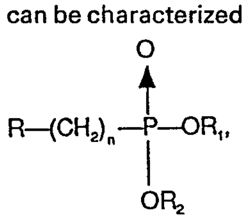

wherein R is hydrogen, a straight or branched alkyl group with 1 to 30 carbon atoms, an aryl group or a substituted aryl group, $R_1$ and $R_2$ independent of each other are hydrogen, a metal, or has the same meaning as R and n in an integer from 1 to 10, preferably 1.

As examples of suitable metal salts of the alkyl phosphonic acids can be mentioned the salt of zinc, nickel, calcium, sodium, titanium and aluminium. The phosphonic acid derivatives are suitably phosphonic acid, mono-esters or metal salts, and particularly such ones, wherein R is a phenyl group, substituted with one hydroxy group and two lower alkyl groups, having 1 to 6 carbon atoms, preferably tertiary butyl groups, n is 1 and $R_1$ is hydrogen, metal, or a straight or branched alkyl group, having up to 22 carbon atoms.

As examples of suitable phosphonic acid derivatives can be mentioned O-ethyl-(4-hydroxy-3,5-di-tert.butylbenzyl)-phosphonic acid, 0-(2-ethyl-hexyl)-(4-hydroxy-3,5-di-tert.-butylbenzyl)-phosphonic acid, 0-stearyl-(4-hydroxy-3,5-di-tert.butyl-benzyl)-phosphonic acid, 4-hydroxy-3,5-di-tert.butyl-benzyl-phosphonic acid and 0-stearyl-stearyl-phosphonic acid.

The phosphorous compounds are present in the compositions in amounts of at least 0.005 per cent by weight, based on the ethylene polymer, and the amount should suitably be within the range 0.005 to 1 per cent by weight, preferably within the range 0.005 to 0.5 per cent by weight. The most preferred phosphorous compounds are the previously mentioned phosphites and diphosphonites.

The ethylene polymers, which form the base material in the present compositions are essentially linear, have a low density and a fairly narrow molecular weight distribution. In this respect they are radically different from conventional, by radical-initiation high pressure polymerization prepared polyethylene of corresponding density, which has a branched, complex molecular structure and a broad molecular weight distribution. Ethylene polymers to be used in the compositions of the invention can be prepared by co-ordination polymerization in the presence of metal-organic catalysts, e.g. by low pressure processes in slurry, solution or gas-phase, whereby the polymerization conditions and the catalysts are selected to give an essentially linear polymer. The catalysts can for example be based on chromium or titanium. Catalysts based on titanium are preferred. By linear polymer should be understood, that the branching, that occurs in the polymer, is dependent essentially only on the type and amount of comonomers.

Preferably, ethylene polymers produced by a gas-phase process are used in the compositions, and particularly such polymers produced by the recently commercialized, so-called "Unipol"®-process. An example of this process is described in the Swedish patent 7 603 163-2. The process can be carried out in such a manner, that the polymerization of the monomers occurs in a gas-phase in a fluidized bed of already formed granules of the polymer at a pressure of 5 to 25 kg/cm² and a temperature of 75 to 125 °C. A catalyst based on titanium, magnesium and aluminium as active components, e.g. according to the European patent applications 0 004 645, 0 004 646 and 0 004 647, is injected continuously in the bed in an amount of 100 to 500 ppm, based on the amount of added monomer. The polymerization reaction is carried out in the presence of hydrogen gas.

The ethylene polymers in the compositions should be essentially linear, and the content of aliphatic branches, having a chain length of more than 12 carbon atoms, should be negligible. The greater part of the branches should in themselves be straight and not branched. The amount of short aliphatic branches in the ethylene polymer should be between 1 and 60 per 1000 carbon atoms in the chain, and suitably between 5 and 30 per 1000 carbon atoms. The length of the branches should be between 1 and 12 carbon atoms, suitably between 1 and 8, and preferably between 1 and 4 carbon atoms. Ethylene polymers of this structure can be prepared by copolymerization of ethylene, and up to 20 per cent by weight, based on the polymer, of alpha-olefins, having 3 to 14 carbon atoms. One or several such comonomers can be employed. The density of the polymer material should not exceed 935 kg/m³, and is suitably within the range 910 to 935 kg/m³. The amount of comonomer for a given density is adapted with respect to length of the comonomer, or comonomers, and greater amounts are required, when shorter comonomers are employed. The ethylene polymer suitably contains from 1 to 20 per cent by weight comonomer, and preferably from 3 to 10 per cent by weight, and the comonomers are alpha-olefins, having 3 to 14 carbon atoms. The comonomer, or comonomers, are suitably $C_3$ to $C_{10}$ alpha-olefins, and preferably $C_3$ to $C_6$ alpha-olefins. As examples of suitable comonomers can be mentioned propylene, 1-butene, 1-pentene, 1-hexene, 4-methyl-pentene, 1-octene. When the ethylene polymer is a copolymer, containing two or more monomers, besides ethylene, it is suitably a terpolymer of ethylene, propylene, or butene, and one higher olefin.

The molecular weight distribution of the ethylene polymer should not be too broad, if the desired properties of the polymer are to be obtained. The molecular weight distribution can be established by gel chromatography, and is here given as the ratio $M_w/M_n$. The ratio should be within the range 1.5 to 6.

The average molecular weight, $M_w$, should be roughly between 25000 and 500000, and is preferably between 50000 and 250000. Another measure of the molecular weight, used in ethylene polymer technology, is the melt index ($MI_2$, viscosity at 190 °C, given as grams of material flowing from a standardized test equipment per 10 minutes). For ethylene polymers in the present compositions the melt index, $MI_2$, according to ISO R 292, should be between 0.05 and 3, preferably between 0.2 and 2.

The compositions are prepared by mixing the phosphorous compounds and the ethylene polymer by means of known mixing technique. The compounds can e.g. be mixed directly into the ethylene polymer in powder form, followed by

extrusion, or they can be hot compounded into the ethylene polymer, followed by extrusion.

Other additives, such as antioxidants, and processing aids of the metal-soap type, can, of course, also be incorporated in the compositions.

Phenolic antioxidants can e.g. be incorporated in the composition, e.g. pentaerythrityl tetrakis[3-(3,5-di-tert.butyl-4-hydroxyphenyl)-propionate], octadecyl-3-(3,5-di-tert.butyl-4-hydroxyphenyl)-propionate, and 2,6-di-tert.butyl-para-cresol. These antioxidants are suitably used in amounts exceeding 0.01 per cent by weight, based on the ethylene polymer. It is particularly preferred, that the phosphorous compounds in the compositions are used in combination with metal salts of fatty acids, e.g. calcium, zinc or potassium salts. The term fatty acids is here used for aliphatic monocarboxylic acids, having from about 6 carbon atoms to about 20 carbon atoms. Preferably, metal stearates are used. Combinations of phosphorous compounds and metal soaps give film, having excellent optical properties. The metal soaps are suitably used in amounts of at least 0.1 per cent by weight e.g. 0.1 to 1 per cent by weight, based on the ethylene polymer. A suitable weight ratio of phosphorous compounds and metal soap is from 1:25 to 25:1 preferably from 1:20 to 1:2.

Film, preferably biaxially oriented film, is produced from the above described ethylene polymer compositions in a conventional manner by casting or blowing, preferably by blowing. The blow ratio can be within the range 1:1 to 5:1, and can suitably be up to 2:1. The thickness of the produced film can vary between 5 to 300 μm, and is preferably from 10 to 200 μm. The produced films have very favourable optical properties.

The invention is further illustrated in the following examples which, however, are not intended to limit the same. Parts and per cent relates to parts by weight and per cent by weight respectively, unless otherwise stated.

Example 1

A base polymer was prepared from ethylene and about 7 per cent by weight of butene, according to the Unipol®-process. The polymer material had the following properties:

| | |
|---|---|
| $MI_2$ (according to ISO R 292) | 1 |
| $M_w/M_n$ | 3.5 |
| Density (according to ASTM-D 2839–69) kg/$m^3$ | 919 |

Films were produced from compounds of this base polymer as such and from this and additives according to the invention. The base polymer and the additives were hot compounded in a twin screw mixer in laboratory scale at a temperature of about 200 °C. 40 μm thick film was produced by blowing at 235 °C at a blow ratio of 2:1. An extruder, having a screw diameter of 30 mm and a 80 mm die, was used. Gloss, according to ASTM-2457, and haze in %, according to ASTM-D 1003, were measured on the produced films.

The results are shown in the table below. The abbreviation TBPP is used for tris-(2,4-di-tert.butylphenyl)-phosphite.

| Additive | Amount % | Gloss | Haze |
|---|---|---|---|
| – | – | 40 | 34 |
| TBPP | 0.1 | 99 | 16 |
| TBPP | 0.2 | 87 | 25 |
| TBPP/Zn-stearate | 0.1/0.3 | 100 | 16 |
| TBPP/Zn-stearate | 0.1/0.5 | 117 | 14 |
| TBPP/Zn-stearate | 0.03/0.5 | 110 | 15 |
| Zn-stearate, comparison | 0.3 | 70 | 28 |
| Zn-stearate, comparison | 0.5 | 75 | 25 |

Example 2

Compounds and films were produced from the same base polymer as in Example 1 and according to the same technique. Instead of phosphite, tetrakis(2,4-di-tert.butylphenyl)-4,4′-bisphenylylene-diphosphonite was used. The latter is referred to as phosphonite below. Gloss and haze were measured on the produced films and the results are shown below.

| Additive | Amount % | Gloss | Haze |
|---|---|---|---|
| – | – | 40 | 34 |
| Phosphonite | 0.1 | 93 | 21 |
| Phosphonite | 0.2 | 85 | 26 |
| Phosphonite/Zn-stearate | 0.1/0.5 | 97 | 17 |
| Phosphonite/Zn-stearate | 0.03/0.5 | 95 | 17 |

Example 3

Compositions according to the invention were prepared from the same base polymer as in Example 1 and films were produced from the compositions. The base polymer and the additives were hot compounded in a Banbury-mixer in production scale at a temperature of 220°C. 40 µm thick film was produced by blowing at 235°C, blow ratio 2:1. An extruder, having a diameter of 70 mm and a 200 mm die, was used. The results from measurements of gloss and haze are shown in the table below.

| Additive | Amount % | Gloss | Haze |
|---|---|---|---|
| - | - | 60 | 30 |
| TBPP | 0.13 | 110 | 13 |
| TBPP/Zn-stearate | 0.03/0.5 | 108 | 14 |

Example 4

Compositions according to the invention were produced from the same base polymer as in Example 1. The base polymer and the additives were hot compounded in a continuous mixer in production scale at a temperature of 220°C. Films were produced from the compositions in the same manner as described in Example 3. Gloss and haze were measured on the produced films.

| Additive | Amount % | Gloss | Haze |
|---|---|---|---|
| - | - | 60 | 30 |
| TBPP | 0.08 | 100 | 15 |
| TBPP/Zn-stearate | 0.08/0.5 | 105 | 14 |

Example 5

Another batch of base polymer was prepared from ethylene and about 7 per cent by weight of butene according to the Unipol-process. The polymer material had the following properties:

| | |
|---|---|
| $MI_2$ (according to ISO R 292) | 0.9 |
| $M_w/M_n$ | 3.5 |
| Density (according to ASTM-D 2839-69) kg/$m^3$ | 918 |

Film was produced from compounds of this polymer as such and from this and additives according to the invention. As comparison film was also produced from the base polymer and a phenolic antioxidant. The base polymer and the additives were hot compounded in a twin screw mixer in laboratory scale at a temperature of about 200°C. 40 µm thick film was produced by blowing at a temperature of 235°C at a blow ratio of 2:1. An extruder having a screw diameter of 30 mm and a 80 mm die was used. The results from measurements of gloss and haze are shown below.

The additives mentioned in the table are as follows: TBPP = tris-(2,4-di-tert.butylphenyl)-phosphite, TNPP = trisnonylphenylphosphite, Phosphonic acid derivative A = O-ethyl-(4-hydroxy-3,5-di-tert.butylbenzyl)-phosphonic acid, Phenolic antioxidant A = pentaerythrityl tetrakis[3-(3,5-di-tert.butyl-4-hydroxy-phenyl)-propionate].

| Additive | Amount % | Gloss | Haze |
|---|---|---|---|
| - | - | 60 | 24 |
| TBPP | 0.1 | 95 | 15 |
| TNPP | 0.1 | 87 | 21 |
| TNPP | 0.2 | 89 | 17 |
| Phosphonic acid derivative A | 0.1 | 118 | 14 |
| Phenolic antioxidant A, comparison | 0.05 | 60 | 24 |
| Phenolic antioxidant A, comparison | 0.1 | 62 | 24 |

As evident from the results conventional phenolic antioxidants did not have any effect on the optical properties of the produced films.

Example 6

The same base polymer as in Example 5 was used. Film was produced from compounds of the

base polymer as such and of this with incorporated additives according to the invention. The base polymer and the additives were hot compounded in a twin screw mixer in semi-production scale at a temperature of about 200°C. Films were produced as in Example 5. Gloss and haze were measured on the produced films. The following additives were used: TBPP=tris-(2,4-di-tert.butylphenyl)-phosphite, Phosphonic acid derivative B=nickel salt of O-ethyl-(4-hydroxy-3,5-di-tert.butylbenzyl)-phosphonic acid.

| Additive | Amount % | Gloss | Haze |
|---|---|---|---|
| – | – | 80 | 20 |
| TBPP | 0.1 | 109 | 13 |
| Phosphonic acid derivative B | 0.1 | 116 | 14 |

## Claims

1. Use of an ethylene polymer based composition, which composition substantially comprises an essentially linear ethylene polymer having a density not higher than 935 kg/m$^3$, a molecular weight distribution within the range 1.5 to 6 and a melt index between 0.05 and 3, said polymer containing 1 to 60 short aliphatic branches the greater part being straight branches per 1000 carbon atoms in the chain and being a copolymer of ethylene and up to 20 per cent by weight of one or several alpha-olefins having 3 to 14 carbon atoms, and at least 0.005 per cent by weight, based on the ethylene polymer, of a phosphorous compound selected from phosphites, phosphonites and phosphonic acid derivatives for the production of film with improved optical properties.

2. Use according to claim 1, whereby the ethylene polymer in the composition has a molecular weight, $M_w$, of from 25000 to 500000.

3. Use according to claim 1, whereby the phosphorous compound in the composition is a phosphite or phosphonite having the general formula

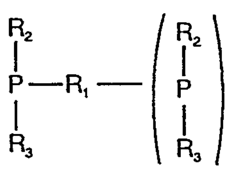

n = 0 or 1,

wherein $R_2$ and $R_3$ independent of each other are alkyl or alkoxy groups having 1 to 30 carbon atoms, aryl or phenoxy groups, and $R_1$ has the same meaning as $R_2$ and $R_3$, or is the corresponding divalent group when n is 1.

4. Use according to claim 3, whereby the phosphorous compound is a trisalkylphenylphosphite, a tris-(2,4-dialkylphenyl)-phosphite or a tetrakis(2,4-dialkylphenyl)-4,4'-bis-phenylylene-diphosphonite, wherein the alkyl groups have 9, 1 to 9, and 1 to 9 carbon atoms respectively.

5. Use according to claim 1, whereby the phosphorous compound in the composition is a phosphonic acid derivative having the general formula

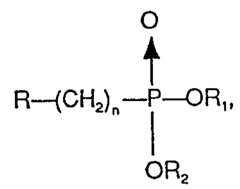

wherein R is hydrogen, a straight or branched alkyl group having 1 to 30 carbon atoms, an aryl group or a substituted aryl group, $R_1$ and $R_2$ independent of each other are hydrogen, a metal or has the same meaning as R and n is an integer from 1 to 10.

6. Use according to claim 5, whereby the phosphonic acid derivative has the general formula

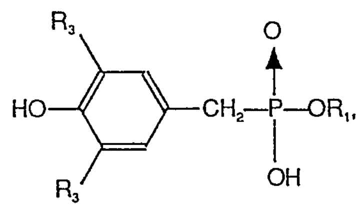

wherein $R_1$ is hydrogen, metal or a straight or branched alkyl group having up to 22 carbon atoms, and $R_3$ are lower alkyl groups having 1 to 6 carbon atoms, preferably tertiary butyl groups.

7. Use according to any of the preceding claims, whereby the composition also contains a metal salt of a fatty acid in an amount of at least 0.1 per cent by weight, based on the ethylene polymer.

8. Use according to any of the preceding claims for the production of blown film.

## Patentansprüche

1. Verwendung einer Zusammensetzung auf Basis eines Äthylenpolymeren, wobei diese Zusammensetzung im wesentlichen ein im wesentlichen lineares Äthylenpolymeres mit einer Dichte nicht höher als 935 kg/m$^3$, einer Molekulargewichtsverteilung innerhalb des Bereichs von 1,5 bis 6 und einem Schmelzindex zwischen 0,05 und 3 aufweist, wobei dieses Polymere 1 bis 60 kurze aliphatische Verzweigungen (deren grösserer

Teil gerade Zweige sind) pro 1000 Kohlenstoffatome in der Kette aufweist und ein Copolymeres von Äthylen und bis zu 20 Gew.% eines oder mehrerer α-Olefine mit 3 bis 14 Kohlenstoffatomen ist und wenigstens 0,005 Gew.%, bezogen auf das Äthylenpolymere, einer Phosphorverbindung, ausgewählt aus Phosphiten, Phosphoniten und Phosphonsäurederivaten, zur Erzeugung von Filmen mit verbesserten optischen Eigenschaften.

2. Verwendung gemäss Anspruch 1, dadurch gekennzeichnet, dass das Äthylenpolymere in der Zusammensetzung ein Molekulargewicht, $M_w$, von 25000 bis 500000 hat.

3. Verwendung gemäss Anspruch 1, dadurch gekennzeichnet, dass die Phosphorverbindung in der Zusammensetzung ein Phosphit oder Phosphonit der allgemeinen Formel

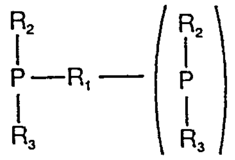 n = 0 or 1,

ist, worin $R_2$ und $R_3$ unabhängig voneinander Alkyl- oder Alkoxygruppen mit 1 bis 30 Kohlenstoffatomen, Aryl- oder Phenoxygruppen sind und $R_1$ dieselbe Bedeutung wie $R_2$ und $R_3$ hat, oder die entsprechende zweiwertige Gruppe ist, wenn n = 1 ist.

4. Verwendung gemäss Anspruch 3, dadurch gekennzeichnet, dass die Phosphorverbindung ein Trisalkylphenyl-phosphit, ein Tris-(2,4-dialkylphenyl)-phosphit oder ein Tetrakis-(2,4-dialkylphenyl)-4,4'-bis-phenylylen-diphosphonit ist, worin die Alkylgruppen 9, 1 bis 9 bzw. 1 bis 9 Kohlenstoffatome haben.

5. Verwendung gemäss Anspruch 1, dadurch gekennzeichnet, dass die Phosphorverbindung in der Zusammensetzung ein Phosphonsäurederivat der allgemeinen Formel

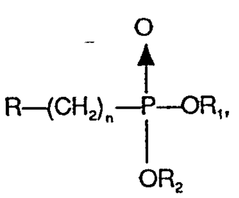

ist, worin R Wasserstoff, eine gerade oder verzweigte Alkylgruppe mit 1 bis 30 Kohlenstoffatomen, eine Arylgruppe oder eine substituierte Arylgruppe ist, $R_1$ und $R_2$ unabhängig voneinander Wasserstoff oder ein Metall sind oder dieselbe Bedeutung wie R haben und n eine Zahl von 1 bis 10 ist.

6. Verwendung gemäss Anspruch 5, dadurch gekennzeichnet, dass das Phosphonsäurederivat die allgemeine Formel

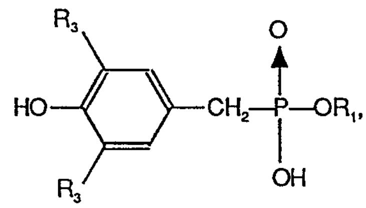

hat, worin $R_1$ Wasserstoff, Metall oder eine gerade oder verzweigte Alkylgruppe mit 1 bis 22 Kohlenstoffatomen ist und $R_3$ niedrig-Alkylgruppen mit 1 bis 6 Kohlenstoffatomen, vorzugsweise tert.-Butylgruppen sind.

7. Verwendung gemäss einem der vorhergehenden Ansprüche, dadurch gekennzeichnet, dass die Zusammensetzung auch ein Metallsalz einer Fettsäure in einer Menge von wenigstens 0,1 Gew.%, bezogen auf das Äthylenpolymere, enthält.

8. Verwendung gemäss einem der vorhergehenden Ansprüche für die Erzeugung von Film durch Blasen.

**Revendications**

1. Utilisation d'une composition à base d'un polymère d'éthylène, cette composition comprenant essentiellement un polymère d'éthylène linéaire dont la masse volumique n'est par supérieure à 935 kg/m³, dont la répartition des poids moléculaires est comprise entre 1,5 et 6 et dont l'indice de fusion est compris entre 0,05 et 3, le polymère renfermant entre 1 et 60 ramifications aliphatiques courtes (la majeure partie ayant des chaînes droites), pour 1000 atomes de carbone dans la chaîne et étant un copolymère d'éthylène, et jusqu'à 20% en poids d'une ou de plusieurs alpha-oléfines ayant de 3 à 14 atomes de carbone et au moins 0,005% en poids sur la base du polymère d'éthylène, d'un dérivé de phosphore choisi parmi les phosphites, phosphonites et dérivés d'acide phosphonique, pour la fabrication de pellicules ayant des propriétés optiques améliorées.

2. Utilisation selon la revendication 1, dans laquelle le polymère d'éthylène dans la composition présente un poids moléculaire, $M_w$, compris entre 25000 et 500000.

3. Utilisation selon la revendication 1, dans laquelle le dérivé de phosphore dans la composition est un phosphite ou un phosphonite de formule générale:

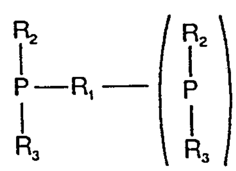 n = 0 or 1,

dans laquelle $R_2$ et $R_3$ indépendamment l'un de l'autre, sont des groupes alkyle ou alcoxy ayant de 1 à 30 atomes de carbone, des groupes aryle ou phénoxy, et $R_1$ a la même signification que $R_2$

et $R_3$, ou est le groupe bivalent correspondant au cas où n = 1.

4. Utilisation selon la revendication 3, dans laquelle le dérivé de phosphore est un trisalkylphényl-phosphite, un tris-(2,4-dialkylphényl)phosphite ou un tétrakis(2,4-dialkylphényl)-4,4'-bisphénylylène-disphosphonite, dans lesquels les groupes alkyle ont respectivement 9, de 1 à 9 et de 1 à 9 atomes de carbone.

5. Utilisation selon la revendication 1, dans laquelle le dérivé de phosphore dans la composition est un dérivé d'acide phosphonique de formule générale

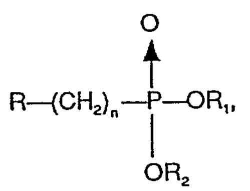

dans laquelle R est l'hydrogène, un groupe alkyle à chaîne droite ou ramifiée ayant de 1 à 30 atomes de carbone, un groupe aryle ou un groupe aryle substitué, $R_1$ et $R_2$ sont indépendamment l'un de l'autre de l'hydrogène, un métal ou ont la même signification que R et n est un nombre entier compris entre 1 et 10.

6. Utilisation selon la revendication 5 dans laquelle le dérivé d'acide phosphonique est de formule générale

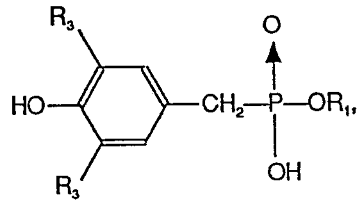

dans laquelle $R_1$ est de l'hydrogène, un métal ou un groupe alkyle à chaîne droite ou remifiée ayant jusqu'à 22 atomes de carbone, et les $R_3$ sont des groupes alkyle inférieur ayant de 1 à 6 atomes de carbone, de préférence des groupes butyle tertiaire.

7. Utilisation selon l'une quelconque des revendications précédentes dans laquelle la composition comprend également un sel d'un métal et d'un acide gras à un taux d'au moins 0,1% en poids, rapporté au polymère d'éthylène.

8. Utilisation selon l'une quelconque des revendications prédédentes pour la fabrication de pellicules par soufflage.